# EUROPEAN PATENT APPLICATION

(11) **EP 4 753 247 A1**
(43) Date of publication of application: **03.06.2026**
(21) Application number: 25217656.5
(22) Date of filing: 21.11.2025
(51) Int. Cl.: H04N 1/00, G03G 15/08, G03G 15/00, G03G 21/16, G03G 21/18

(54) **INFORMATION PROCESSING SYSTEM, IMAGE PROCESSING APPARATUS, AND INFORMATION PROCESSING METHOD**

(30) Priority: 28.11.2024 JP 2024207166
(71) Applicant: KYOCERA Document Solutions Inc., Osaka-shi, Osaka 540-8585 (JP)
(72) Inventor: Kobayashi, Yuya, Osaka-shi, 540-8585 (JP)
(74) Representative: Plougmann Vingtoft a/s

(57) **Abstract**

An information processing system (100) includes an acquisition unit (101), a communication unit (102), and a processing unit (103). The acquisition unit (101) acquires type information indicating a type of a wireless tag (71) included in a consumable product (toner cartridge) used in an image processing apparatus (10). The communication unit (102) communicates with the wireless tag (71). The processing unit (103) executes, at a timing when a response time according to type information has elapsed since the processing unit (103) sent a command to the wireless tag (71), a determination process of determining whether or not the consumable product is a genuine product on the basis of whether or not response information is received from the wireless tag (71).

## Description

### Incorporation by Reference

This application is based upon and claims the benefit of priority from the corresponding Japanese Patent Application No. 2024-207166 filed on November 28, 2024, the entire contents of which are incorporated herein by reference.

The present disclosure relates to an information processing system, an image processing apparatus, and an information processing method.

### Background

As a technology in the related art, a setting information applying apparatus that is provided in an image processing apparatus and applies function setting information to the image processing apparatus is known. The setting information applying apparatus includes a wireless communication section capable of wireless communication with an external communication device, a storage section, and a writing section that writes function setting information sent from the external communication device to the storage section.

### Summary

An information processing system according to an aspect of the present disclosure includes an acquisition unit, a communication unit, and a processing unit. The acquisition unit acquires type information indicating a type of a wireless tag included in a consumable product used in an image processing apparatus. The communication unit communicates with the wireless tag. The processing unit executes, at a timing when a response time according to type information has elapsed since the processing unit sent a command to the wireless tag, a determination process of determining whether or not the consumable product is a genuine product on the basis of whether or not response information is received from the wireless tag.

An image processing apparatus according to another aspect of the present disclosure includes the above-mentioned information processing system and a control system that performs control related to the consumable product.

An information processing method according to another aspect of the present disclosure is an information processing method that is executed by one or more processors and includes an acquisition step, a communication step, and a processing step. In the acquisition step, type information indicating a type of a wireless tag included in a consumable product used in an image processing apparatus is acquired. In the communication step, communication with the wireless tag is performed. In the processing step, at a timing when a response time according to type information has elapsed since a command is sent to the wireless tag, a determination process of determining whether or not the consumable product is a genuine product on the basis of whether or not response information is received from the wireless tag is executed.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

These and other objects, features and advantages of the present disclosure will become more apparent in light of the following detailed description of best mode embodiments thereof, as illustrated in the accompanying drawings.

### Brief Description of Figures

Fig. 1 is a schematic diagram showing a configuration of an image processing apparatus according to an embodiment.
Fig. 2 is a schematic diagram showing a configuration of a toner supply unit in the image processing apparatus according to the embodiment.
Fig. 3 is a block diagram showing a configuration of a control system and an information processing system in the image processing apparatus according to the embodiment.
Fig. 4 is a diagram showing an example of correlation data between a type of a wireless tag and a response time in the information processing system according to the embodiment.
Fig. 5 is a flowchart showing an operation example of the information processing system according to the embodiment.
Fig. 6 is a schematic view showing an operation example of the information processing system according to the embodiment.

### Detailed Description

Hereinafter, an embodiment of the present disclosure will be described with reference to the accompanying drawings. The following embodiment is an example embodying the present disclosure and is not intended to limit the technical scope of the present disclosure.

### [1] Overall configuration of image processing apparatus

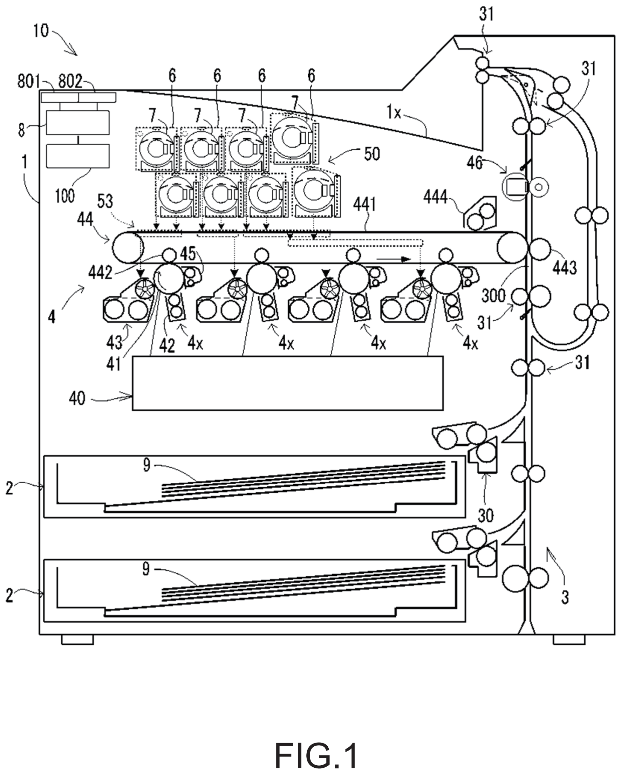

First of all, a schematic configuration of an image processing apparatus 10 according to the present embodiment will be described with reference to Fig. 1. In the present embodiment, as an example, the image processing apparatus 10 is a printer apparatus capable of executing a printing process of forming an image on a sheet 9. It should be noted that the image processing apparatus 10 may be a facsimile apparatus with a facsimile function or may be a multifunction peripheral or the like with a plurality of functions such as a scan function, a facsimile function, and a copying function.

As shown in Fig. 1, the image processing apparatus 10 includes a casing 1, a sheet accommodation part 2, a conveyance apparatus 3, a print apparatus 4, a toner supply unit 50, a control system 8, an operation apparatus 801, a display apparatus 802, and an information processing system 100.

The casing 1 houses the conveyance apparatus 3, the print apparatus 4, the toner supply unit 50, and the control system 8. Within the casing 1, a conveyance path 300 that is a passageway for sheets 9 is provided.

The conveyance apparatus 3 includes a sheet feeding mechanism 30 and a plurality of conveyance roller pairs 31. The sheet feeding mechanism 30 feeds the sheets 9 stored in the sheet accommodation part 2 to the conveyance path 300 one by one. The plurality of conveyance roller pairs 31 conveys the sheets 9 along the conveyance path 300. One of the plurality of conveyance roller pairs 31 delivers a sheet 9 with an image formed by the print apparatus 4 from the conveyance path 300 onto a delivery tray 1x.

The print apparatus 4 executes a printing process on the sheet 9 conveyed along the conveyance path 300. In the example shown in Fig. 1, the print apparatus 4 executes a printing process by an electrophotographic method. In the present embodiment, the print apparatus 4 includes a light exposure apparatus 40, one or more image forming parts 4x, a transfer apparatus 44, and a fixing apparatus 46.

Moreover, in the present embodiment, the print apparatus 4 is a tandem-type color print apparatus. Therefore, the print apparatus 4 includes a plurality of image forming parts 4x corresponding to a plurality of development colors. In the example shown in Fig. 1, the print apparatus 4 includes four image forming parts 4x respectively corresponding to development colors in yellow, magenta, cyan, and black.

Each of the image forming parts 4x includes a photoreceptor 41, a charging apparatus 42, a developing apparatus 43, and a drum cleaning apparatus 45. In each of the image forming parts 4x, the photoreceptor 41 rotates and the charging apparatus 42 charges the surface of the photoreceptor 41.

The light exposure apparatus 40 scans laser light on the charged surface of the photoreceptor 41, thereby writing an electrostatic latent image on the surface of the photoreceptor 41. The developing apparatus 43 supplies toner to the surface of the photoreceptor 41, thereby developing the electrostatic latent image onto the toner image. The transfer apparatus 44 transfers the toner image of the surface of the photoreceptor 41 onto the sheet 9 conveyed along the conveyance path 300.

In the tandem-type print apparatus 4, the transfer apparatus 44 includes an intermediate transfer belt 441, a plurality of primary transfer apparatuses 442, a secondary transfer apparatus 443, and a belt cleaning apparatus 444. The plurality of primary transfer apparatuses 442 is provided corresponding to the plurality of image forming parts 4x, respectively.

The intermediate transfer belt 441 rotates in such a state that a part of the intermediate transfer belt 441 is along the plurality of image forming parts 4x. Each of the plurality of primary transfer apparatuses 442 transfers the toner image of the surface of the photoreceptor 41 of each of the plurality of image forming parts 4x to the surface of the intermediate transfer belt 441. Accordingly, a color toner image obtained by combining toner images in multiple colors is formed on the surface of the intermediate transfer belt 441.

The secondary transfer apparatus 443 transfers the color toner image on the surface of the intermediate transfer belt 441 to the sheet 9. The fixing apparatus 46 heats and presses the color toner image on the sheet 9, thereby fixing the color toner image to the sheet 9.

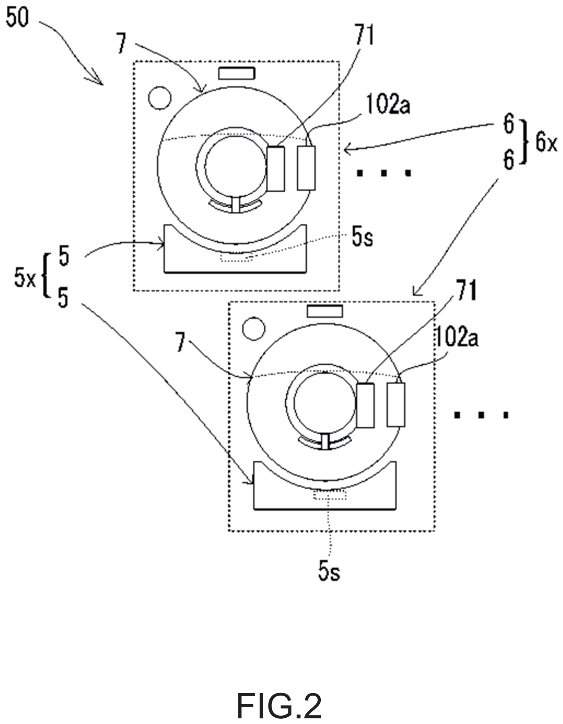

The toner supply unit 50 supplies toner to the developing apparatuses 43 of the plurality of image forming parts 4x in the print apparatus 4. The toner supply unit 50 includes a plurality of mounting parts 5 (see Fig. 2). Each mounting part 5 is a portion on which a toner cartridge 7 is removably mounted.

The toner supply unit 50 supplies a toner in a plurality of toner cartridges 7 mounted on the plurality of mounting parts 5, respectively, to the developing apparatus 43 of each of the plurality of image forming parts 4x for each development color.

It should be noted that the sheet 9 is a sheet-like image forming medium, such as paper. The toner is an example of a developer. Each toner cartridge 7 is an example of a developer accommodation unit that houses the developer and is an example of a consumable product that is used for the image processing apparatus 10.

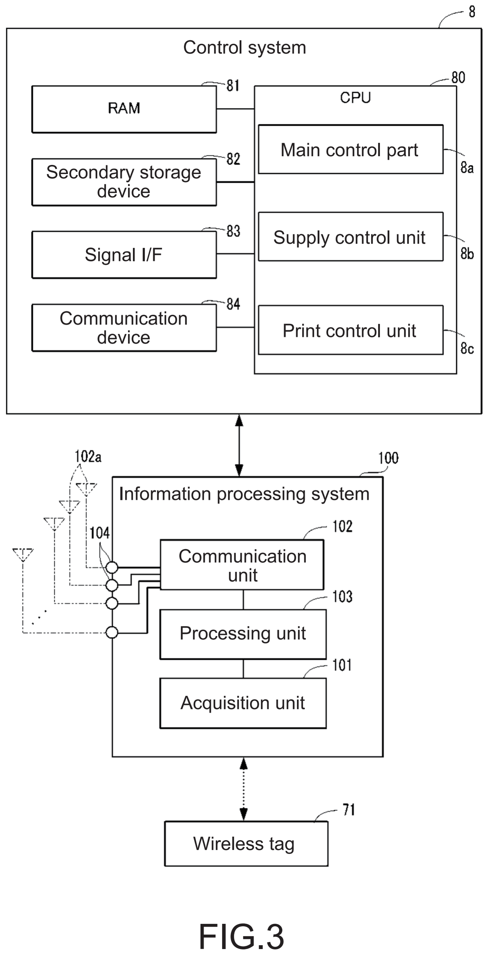

In the present embodiment, the toner supply unit 50 includes, as shown in Fig. 2, four pairs of mounting part sets 5x (see Fig. 3). The four pairs of mounting part sets 5x corresponds to toner in yellow, magenta, cyan, and black, respectively. Yellow, magenta, cyan, and black are example development colors, respectively. The four pairs of mounting part sets 5x include two mounting parts 5, respectively. Therefore, the toner supply unit 50 includes eight mounting parts 5. In each of the four pairs of mounting part sets 5x, two toner cartridges 7 for the same color can be mounted on the two mounting parts 5. That is, the two toner cartridges 7 that store toner in the same color can be mounted on the toner supply unit 50.

In the toner supply unit 50, the toner cartridge 7 that is one of the two toner cartridges 7 is selected as a target container for each development color. The target container is a toner supply source. Hereinafter, the other toner cartridge 7 of the two toner cartridges will be referred to as a standby container.

In a case where the toner in the target container runs out for each development color, the target container is switched to the other container. That is, the use of the target container at a point of time when the toner runs out is stopped, the standby container is newly used as a target container. Accordingly, for each development color, even during replacement of one container of the two toner cartridges 7, the printing process can be continued using the other container.

As shown in Fig. 2, the toner supply unit 50 further includes eight locking mechanisms 6 and eight residual amount sensors 5s respectively corresponding to the eight mounting parts 5.

The eight locking mechanisms 6 are divided into four locking mechanism sets 6x respectively corresponding to the four pairs of mounting part sets 5x (see Fig. 3). The four locking mechanism sets 6x include two locking mechanisms 6 respectively corresponding to the two mounting parts 5.

Each residual amount sensor 5s detects a toner residual amount in the corresponding toner cartridge 7. For example, each residual amount sensor 5s is a magnetic permeability sensor. It should be noted that each residual amount sensor 5s may be a photo sensor that detects a storage level of toner in the toner cartridge 7 or may be a load cell that measures weight in the toner cartridge 7. In the present embodiment, each residual amount sensor 5s is capable of detecting an empty state of the toner cartridge 7 mounted on each mounting part 5. The empty state is a state in which no toner remains in the toner cartridge 7.

Each locking mechanism 6 is a mechanism capable of selectively switching between a lock state and an unlocked state. The lock state is a state that does not allow the toner cartridge 7 to be removed from the corresponding mounting part 5. The unlocked state is a state that allows the toner cartridge 7 to be removed from the corresponding mounting part 5.

The operation apparatus 801 is an apparatus that receives a human operation. For example, the operation apparatus 801 includes at least one of a touch panel and an operation button. The display apparatus 802 is capable of displaying various types of information. For example, the display apparatus 802 is a panel display apparatus, such as a liquid-crystal display apparatus.

The control system 8 controls various electrical devices provided in the image processing apparatus 10. In the present embodiment, the control system 8 performs control related to the toner cartridge 7 (consumable product). As shown in Fig. 3, the control system 8 includes a central processing unit (CPU) 80, a random access memory (RAM) 81, a secondary storage device 82, a signal interface 83, and a communication device 84.

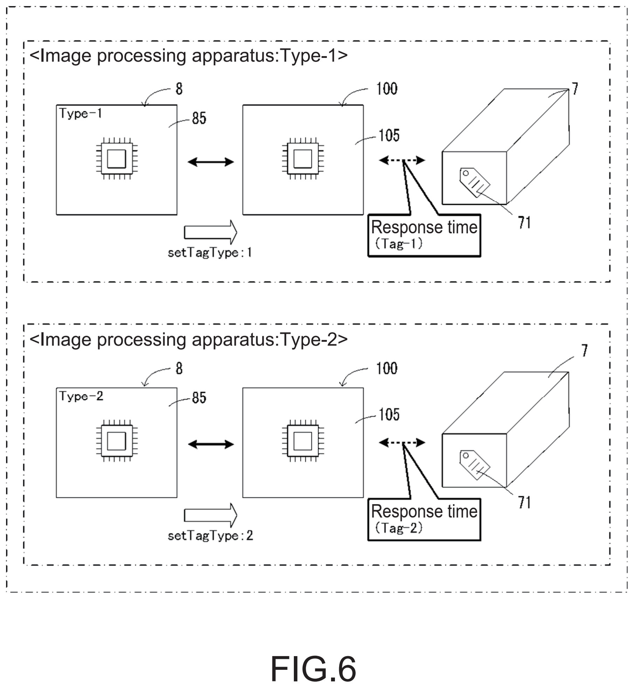

Moreover, in the present embodiment, the control system 8 is mounted on one board 85 (see Fig. 6). Here, the function executed by the control system 8 differs depending on a model type of the image processing apparatus 10. Therefore, the board 85 on which the control system 8 is mounted is a specific board depending on the model type of the image processing apparatus 10.

The CPU 80 is an example of a processor that executes various control and data processing by executing a computer program. The RAM 81 temporarily stores the computer program and various types of data executed by the CPU 80.

The secondary storage device 82 is a computer-readable nonvolatile storage apparatus. The secondary storage device 82 stores the computer program and various types of data executed by the CPU 80. For example, at least one of a flash memory and a hard disk drive is employed as the secondary storage device 82.

The signal interface 83 converts detection signals from various sensors provided in the image processing apparatus 10 into digital detection data. The detection data is transmitted to the CPU 80.

The communication device 84 communicates with one or more host apparatuses and a plurality of external apparatuses including the information processing system 100 through a network. The CPU 80 communicates with each external apparatus through the communication device 84. The host apparatus is an information processing apparatus that requests a printing process from the image processing apparatus 10.

The CPU 80 includes a plurality of processing modules realized by executing the computer program. As shown in Fig. 3, the plurality of processing modules includes a main control part 8a, a supply control unit 8b, and a print control unit 8c, for example.

The main control part 8a executes a process of receiving various requests and controls to cause the other module to execute processes depending on the requests. For example, the main control part 8a receives a printing request through the operation apparatus 801 or the communication device 84. Moreover, the main control part 8a causes the print control unit 8c to execute a process depending on the printing request.

The supply control unit 8b controls the toner supply unit 50, thereby controlling the supply of the toner to the print apparatus 4 from the toner supply unit 50. For example, the supply control unit 8b controls the toner supply unit 50 to supply the toner in the target container to the developing apparatus 43 under the condition that the toner in the target container residual amount is not in the empty state. Moreover, for example, the supply control unit 8b outputs a lock control signal, thereby controlling each locking mechanism 6 to enter either one of the lock state and the unlocked state.

The print control unit 8c controls the conveyance apparatus 3 and the print apparatus 4. The print control unit 8c causes the conveyance apparatus 3 to convey the sheet 9 while causing the print apparatus 4 to execute the printing process.

In the present embodiment, each toner cartridge 7 (consumable product) includes a wireless tag 71. The wireless tag 71 is an integrated circuit (IC) tag, which is a radio frequency identification (RFID) tag that stores product information of the toner cartridge 7 on a memory (not shown). The product information includes information about the toner, such as color and type of toner stored in the toner cartridge 7. Moreover, the product information includes identification information specific to each toner cartridge 7, in other words, identification information specific to each wireless tag 71.

Here, in a case where the toner cartridge 7 used for the image processing apparatus 10 is a genuine product, the identification information stored in the wireless tag 71 of the toner cartridge 7 corresponds to information indicating that the toner cartridge 7 is a genuine product. On the other hand, in a case where the toner cartridge 7 used for the image processing apparatus 10 is a non-genuine product, the identification information stored in the wireless tag 71 of the toner cartridge 7 corresponds to information indicating that the toner cartridge is a non-genuine product unless it is falsified by an unauthorized third party.

The wireless tag 71 performs near-field communication with the information processing system 100 to be described later, thereby executing a process according to a command sent from the information processing system 100. For example, in a case where the wireless tag 71 receives a read command sent from the information processing system 100, the wireless tag 71 sends data specified in the read command out of data stored on the memory to the information processing system 100. Moreover, in a case where the wireless tag 71 receives a write command and data sent from the information processing system 100, the wireless tag 71 causes the memory to store the received data.

By the way, a technology of determining whether or not the toner cartridge is a genuine product as follows in the image processing apparatus like the image processing apparatus 10 is known as a technology in the related art. For example, a setting information applying apparatus that is provided in an image processing apparatus and applies function setting information to the image processing apparatus is known as a technology in the related art (e.g., see Patent Literature 1). The setting information applying apparatus includes a wireless communication section capable of wireless communication with an external communication device, a storage section, and a writing section that writes function setting information sent from the external communication device to the storage section. In this technology in the related art, for example, it is conceivable that identification information of a wireless tag provided in a toner cartridge (consumable product) that is a genuine product used for the image processing apparatus is written on the storage section as the function setting information. That is, the image processing apparatus communicates with the wireless tag of the toner cartridge in a state in which the toner cartridge is mounted, thereby acquiring the identification information of the wireless tag. The image processing apparatus is capable of determining whether or not the toner cartridge is a genuine product by comparing the identification information acquired from the wireless tag with identification information previously written in a storage apparatus provided in the image processing apparatus.

Specifically, the image processing apparatus determines that the toner cartridge including the wireless tag is a genuine product in a case where the identification information acquired from the wireless tag is identical to the identification information previously written in the storage apparatus of the image processing apparatus. On the other hand, in a case where the identification information acquired from the wireless tag is not identical to the identification information previously written in the storage apparatus of the image processing apparatus, the image processing apparatus determines that the toner cartridge including the wireless tag is a non-genuine product.

Here, in principle, identification information different from the identification information of the genuine product is stored as a wireless tag of a toner cartridge that is a non-genuine product. However, if the identification information of the wireless tag is falsified by an unauthorized third party, identification information imitating the identification information of the genuine product may be stored in the wireless tag. In such a case, in this technology in the related art, there is a problem in that it is difficult to distinguish the identification information of the genuine product from the identification information imitating the identification information of the genuine product and the toner cartridge may be erroneously determined as a genuine product.

In this regard, in the present embodiment, processing executed by the information processing system 100 of the image processing apparatus 10 to be described later can realize the information processing system 100 and the like capable of enhancing the accuracy of determining whether or not the toner cartridge 7 (consumable product) is a genuine product.

Specifically, the information processing system 100 includes a CPU and a read only memory (ROM) and a program for causing the CPU to perform control to be described below is prestored. It should be noted that the program may be recorded on a computer-readable recording medium, such as a CD, DVD, or flash memory, and may be read from the recording medium and installed in the ROM.

The information processing system 100 is an apparatus different from the control system 8, which is a system that controls communication with the wireless tag 71. As shown in Fig. 3, the information processing system 100 includes an acquisition unit 101, a communication unit 102, and a processing unit 103. Specifically, the information processing system 100 executes the above-mentioned program stored in the ROM by using the CPU. Accordingly, the information processing system 100 functions as the acquisition unit 101, the communication unit 102, and the processing unit 103. It should be noted that the information processing system 100 may be constituted by an electronic circuit, such as an integrated circuit (ASIC: application specific integrated circuit).

In the present embodiment, the acquisition unit 101, the communication unit 102, and the processing unit 103 are mounted on a single board 105 (see Fig. 6). In other words, the information processing system 100 is mounted on the single board 105. Here, the acquisition unit 101, the communication unit 102, and the processing unit 103 all have the same function regardless of the model type of the image processing apparatus 10. Therefore, the board 105 on which the information processing system 100 is mounted can be a common board regardless of the model type of the image processing apparatus 10. Accordingly, since there is no need for producing a dedicated board in accordance with the model type of the image processing apparatus 10, there is an advantage that the producing cost for the image processing apparatus 10 can be easily reduced.

The acquisition unit 101 is a communication device that communicates with the control system 8. For example, the acquisition unit 101 transmits data read from the wireless tag 71 by the processing unit 103 to the control system 8. Moreover, the acquisition unit 101 receives the data sent from the control system 8 and transmits the received data to the processing unit 103.

The acquisition unit 101 communicates with the control system 8, thereby acquiring type information indicating the type of the wireless tag 71 included in the consumable product (toner cartridge 7) used for the image processing apparatus 10. Here, the consumable product that is a genuine product includes the wireless tag 71 corresponding to the type of that consumable product. That is, the type information corresponds to the information indicating the type of the consumable product that is a genuine product. Moreover, the consumable product that is a genuine product is used in the image processing apparatus 10 of the model type corresponding to the type of that consumable product. That is, the type information corresponds to the information indicating the type of the image processing apparatus 10.

In the present embodiment, the acquisition unit 101 acquires the type information sent from the control system 8 that performs control related to the consumable product (toner cartridge 7) when the image processing apparatus 10 is activated. Here, control related to the consumable product includes, for example, control of the toner supply from the toner supply unit 50 to the print apparatus 4 by the supply control unit 8b controlling the toner supply unit 50. Moreover, when the image processing apparatus 10 is activated, it includes a case where the power supply of the image processing apparatus 10 is turned on from the off state or a case where a sleep state of the image processing apparatus 10 is cancelled.

Accordingly, since a determination process to be described later is executed every time the image processing apparatus 10 is activated, there is an advantage that it is possible to determine whether or not the consumable product is a genuine product even in a case where the consumable product is replaced while the operation of the image processing apparatus 10 is stopped.

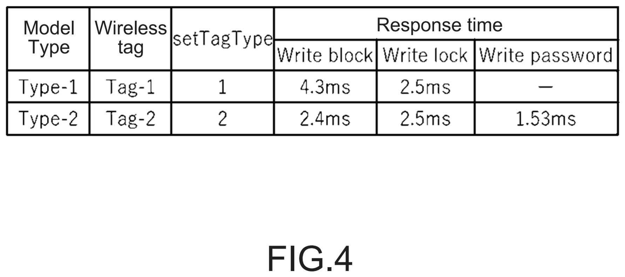

In the present embodiment, the control system 8 sends a "setTagType" command to the information processing system 100 as the type information when the image processing apparatus 10 is activated. As shown in Fig. 4, the "setTagType" command has a different value depending on the model type of the image processing apparatus 10 and the type of the wireless tag 71. In the example shown in Fig. 4, in a case where the "setTagType" command is "1," it indicates that the model type of the image processing apparatus 10 is "Type-1" and the type of the wireless tag 71 is "Tag-1." Moreover, in a case where the "setTagType" command is "2," it indicates that the model type of the image processing apparatus 10 is "Type-2" and the type of the wireless tag 71 is "Tag-2."

Here, the control system 8 sends the "setTagType" command corresponding to the model type of the image processing apparatus 10 including the control system 8 to the information processing system 100. For example, in a case where the model type of the image processing apparatus 10 is "Type-1," the control system 8 of the image processing apparatus 10 sends the "setTagType" command indicating "1" to the information processing system 100. Moreover, in a case where the model type of the image processing apparatus 10 is "Type-2," the control system 8 of the image processing apparatus 10 sends the "setTagType" command indicating "2" to the information processing system 100.

It should be noted that in the example shown in Fig. 4, the "setTagType" command as the type information is represented by a single digit, though not limited thereto. For example, the "setTagType" command may be represented by a character string including alphabets or symbols. Although there are two types as the model type of the image processing apparatus 10 in the example shown in Fig. 4, there may be three or more types. In this case, it is sufficient that the number of "setTagType" commands as the type information increases depending on the number of model types of the image processing apparatus 10.

The communication unit 102 is a communication device that communicates with the wireless tag 71. For example, the communication unit 102 modifies a signal including data output from the processing unit 103 and sends the modified signal to the wireless tag 71 through an antenna 102a. Moreover, the communication unit 102 demodulates a signal from the wireless tag 71 received by the antenna 102a and transmits the demodulated signal to the processing unit 103.

In the example shown in Fig. 3, the information processing system 100 is a multi-antenna-type system including a plurality of antenna ports 104 respectively corresponding to a plurality of antennas 102a. In the present embodiment, since eight antennas 102a respectively corresponding to eight toner cartridges 7 are provided, the information processing system 100 includes eight antenna ports 104. The communication unit 102 is capable of communicating with each wireless tag 71 by communicating with the wireless tag 71 corresponding to each of the antenna ports 104.

It should be noted that in a case where the information processing system 100 may have an anti-collision function and the information processing system 100 may include only one antenna 102a positioned to be capable of communicating with a plurality of wireless tags 71. In this case, the information processing system 100 only needs to include one antenna port 104 corresponding to one antenna 102a. Since the communication unit 102 is capable of identifying the wireless tag 71 by referring to the identification information of each wireless tag 71, the communication unit 102 is individually capable of communicating with the plurality of wireless tags 71 through one antenna 102a.

The processing unit 103 communicates with the wireless tag 71 through the antenna 102a and the communication unit 102. Specifically, in a case where the processing unit 103 writes data to the wireless tag 71, the processing unit 103 sends a write command to instruct the wireless tag 71 to write data and data to be written to the wireless tag 71 through the antenna 102a and the communication unit 102. Moreover, in a case where the processing unit 103 reads data from the wireless tag 71, the processing unit 103 sends a read command to instruct the wireless tag 71 to read specific data to the wireless tag 71 through the antenna 102a and the communication unit 102.

The processing unit 103 has a function to execute a determination process of determining whether or not the consumable product (toner cartridge 7) is a genuine product. The determination process is a process of determining whether or not the consumable product is a genuine product on the basis of whether or not to receive response information from the wireless tag 71 at a timing when a response time according to the type information has elapsed since the processing unit 103 sent the command. Here, the response information is, for example, an acknowledgment (ACK), which is information indicating that the command sent from the information processing system 100 has been normally received by the wireless tag 71 or that the process instructed by the command has been executed.

Specifically, the processing unit 103 first determines a response time according to the type information on the basis of the type information acquired by the acquisition unit 101 in the determination process. In the present embodiment, the processing unit 103 prestores the correlation data shown in Fig. 4 on the ROM and determines a response time according to the type information by referring to the correlation data. In the example shown in Fig. 4, the correlation data includes a response time of each of three write commands (a "Write block" command, a "Write lock" command, and a "Write Password" command).

The "Write block" command is a command that instructs the wireless tag 71 to write specific data. The specific data includes, for example, a page counter value indicating the number of sheets 9 printed with the toner supplied from the toner cartridge 7 or the power consumption of toner stored in the toner cartridge 7. The "Write lock" command is a command that instructs the wireless tag 71 to prohibit rewrite the written data. The "Write Password" command is a command that instructs the wireless tag 71 to set a password used for cancelling the rewriting prohibition.

Here, the response time of each command is a value obtained by previous measurement by communication between the information processing system 100 and the wireless tag 71 before the information processing system 100 is mounted on the image processing apparatus 10. The response time of each command is information specific to the type of the wireless tag 71, which differs depending on the type of the wireless tag 71.

In the example shown in Fig. 4, for the wireless tag 71 of the type "Tag-1," the response time of the "Write block" command is 4.3 ms. On the other hand, for the wireless tag 71 of the type "Tag-2," the same response time of the "Write block" command is 2.4 ms and is different from the response time for the wireless tag 71 of the type "Tag-1." Moreover, regarding the response time of the "Write Password" command, there is no response time for the wireless tag 71 of the type "Tag-1" and the response time is 1.53 ms for the wireless tag 71 of the type "Tag-2," so they are different. It should be noted that in terms of the response time of the "Write lock" command, the wireless tag 71 of the type "Tag-1" and the wireless tag 71 of the type for "Tag-2" are the same. However, in terms of the total value of the response times of the three write commands, the wireless tag 71 of the type "Tag-1" is different from the wireless tag 71 of the type for "Tag-2."

In the example shown in Fig. 4, in a case where the processing unit 103 acquires the "setTagType" command indicating "1" as the type information, the response time of the "Write block" command is determined as 4.3 ms. Moreover, the processing unit 103 determines the response time of the "Write lock" command as 2.5 ms. On the other hand, in a case where the "setTagType" command indicating "2" is acquired as the type information, the processing unit 103 determines the response time of the "Write block" command as 2.4 ms. Moreover, the processing unit 103 determines the response time of the "Write lock" command as 2.5 ms and the response time of the "Write Password" command as 1.53 ms.

Next, the processing unit 103 sends a command that is a target of the determination process to the wireless tag 71 and counts the response time according to the type information determined as described above since the point of time of the command. The processing unit 103 checks whether or not the response information from the wireless tag 71 has been successfully received at a timing when the counting of the response time is completed. In a case where the response information from the wireless tag 71 has been successfully received at the timing, the processing unit 103 determines that the consumable product (toner cartridge 7) including the wireless tag 71 is a genuine product. On the other hand, in a case where the response information from the wireless tag 71 has not been successfully received at the timing, the processing unit 103 determines that the consumable product including the wireless tag 71 is a non-genuine product. It should be noted that such a timing is acceptable if there is a difference of a few milliseconds.

In the present embodiment, the command that is the target of the determination process includes the write command to instruct the wireless tag 71 to write data as described above. Here, for the write command, a difference in the response time is likely to increase depending on the type of the wireless tag 71 as compared to the read command to instruct the wireless tag 71 to read data. Therefore, there is an advantage that employing the write command as the target of the determination process makes it easy to identify the type of the wireless tag 71 on the basis of the response time, and it can enhance the accuracy of determining whether or not the consumable product (toner cartridge 7) is a genuine product. It should be noted that the command that is the target of the determination process is not limited to the write command, and the command may be the read command.

Moreover, in the present embodiment, as described above, the command that is the target of the determination process is a plurality of commands different in the type of instruction for the wireless tag 71. The processing unit 103 executes the determination process on each of the plurality of commands and determines whether or not the consumable product (toner cartridge 7) is a genuine product on the basis of results of all determination processes.

For example, the processing unit 103 executes the determination process on each of the "Write block" command, the "Write lock" command, and the "Write Password" command. The processing unit 103 determines that the consumable product is a genuine product in a case where all results of the determination process with respect to each command are positive (i.e., determines that the consumable product is a genuine product). On the other hand, the processing unit 103 determines that the consumable product is a non-genuine product in a case where the result of the determination process with respect to at least one command is negative (i.e., determines that the consumable product is a non-genuine product). Accordingly, there is an advantage that the accuracy of determining whether or not the consumable product is a genuine product can be enhanced as compared to a case where it determines whether or not the consumable product is a genuine product on the basis of only a result of the determination process regarding one command.

By the way, in the present embodiment, the processing unit 103 first determines whether or not the consumable product (toner cartridge 7) is a genuine product on the basis of the identification information of the wireless tag 71 before the determination process. Specifically, when the image processing apparatus 10 is activated, the processing unit 103 acquires the identification information of the wireless tag 71 from the wireless tag 71 by sending a command to instruct the wireless tag 71 to send the identification information before the determination process. The processing unit 103 determines whether or not the consumable product is a genuine product on the basis of comparison of the acquired identification information with the identification information for determination according to the type information.

The identification information for determination according to the type information is prestored on the ROM of the processing unit 103. Here, as the identification information for determination, the identification information of the wireless tag 71 of the type "Tag-1" and the identification information of the wireless tag 71 of the type "Tag-2" are stored in the ROM.

For example, in a case where the processing unit 103 acquires the "setTagType" command indicating "1" as the type information, the processing unit 103 determines that the identification information of the wireless tag 71 of the type "Tag-1" is the identification information for determination. Next, the processing unit 103 compares the identification information acquired by the acquisition unit 101 with the identification information for determination, determines that the consumable product (toner cartridge 7) is a genuine product in a case where these identification information items are identical, and determines that the consumable product is a non-genuine product in a case where these identification information items are not identical.

The processing unit 103 executes the determination process based on the response time in a case where the processing unit 103 determines that the consumable product (toner cartridge 7) is a genuine product on the basis of the identification information. Accordingly, since it is possible to determine whether or not the consumable product is a genuine product at two stages, there is an advantage that the accuracy of determining whether or not the consumable product is a genuine product can be enhanced as compared to a case where only the determination process based on the response time is executed.

### [2] Operation example of information processing system

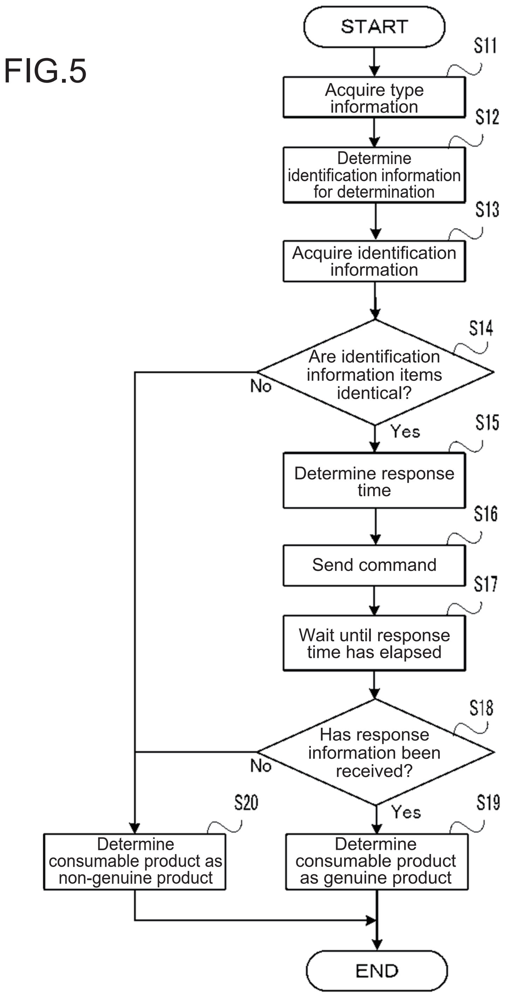

Hereinafter, an example of the information processing method according to the present embodiment and an example of a procedure of the processing executed by the information processing system 100 in the image processing apparatus 10 will be described with reference to Fig. 5. Here, Steps S11, S12, and so on represent the number of the processing procedure (steps) executed by the information processing system 100. In the present embodiment, this processing is executed when the image processing apparatus 10 is activated. Moreover, in the example shown in Fig. 5, the description will be made, assuming that the processing unit 103 is one command to be sent to the wireless tag 71, i.e., that the command that is the target of the determination process is one.

### <Step S11>

First of all, the acquisition unit 101 acquires type information sent from the control system 8 that performs control related to the consumable product (toner cartridge 7) when the image processing apparatus 10 is activated.

### <Step S12>

Next, the processing unit 103 determines identification information for determination according to the type information acquired by the acquisition unit 101 by referring to the identification information for determination prestored in the ROM.

### <Step S13>

Next, the processing unit 103 acquires identification information of the wireless tag 71 from the wireless tag 71 by sending a command to instruct the wireless tag 71 to send the identification information.

### <Step S14>

Next, the processing unit 103 compares the determined identification information for determination with the identification information of the wireless tag 71 acquired from the wireless tag 71. In a case where those identification information items are identical (Step S14: Yes), the processing unit 103 executes Step S15. On the other hand, in a case where those identification information items are not identical (Step S14: No), the processing unit 103 executes Step S20.

### <Step S15>

The processing unit 103 determines the response time according to the type information acquired by the acquisition unit 101 by referring to the correlation data (see Fig. 4) prestored in the ROM. Specifically, as shown in <image processing apparatus: Type-1> in Fig. 6, in a case where the "setTagType" command as the type information acquired by the acquisition unit 101 indicates "1," the processing unit 103 determines the response time according to "Tag-1" that is the type of the wireless tag 71. Moreover, as shown in <image processing apparatus: Type-2> in Fig. 6, in a case where the "setTagType" command as the type information acquired by the acquisition unit 101 indicates "2," the processing unit 103 determines the response time according to "Tag-2" that is the type of the wireless tag 71.

### <Step S16>

Next, the processing unit 103 sends a command to the wireless tag 71. Here, the processing unit 103 sends the write command (e.g., the "Write block" command) to the wireless tag 71.

### <Step S17>

Next, the processing unit 103 waits until the determined response time has elapsed since a point of time when the processing unit 103 sent the command to the wireless tag 71.

### <Step S18>

Next, the processing unit 103 checks whether or not the processing unit 103 has received response information from the wireless tag 71 at a timing when the determined response time has elapsed since the point of time when the processing unit 103 sent the command to the wireless tag 71. In a case where the processing unit 103 has received the response information at the timing (Step S18: Yes), the processing unit 103 executes Step S19. On the other hand, in a case where the processing unit 103 has not received the response information at the timing (Step S18: No), the processing unit 103 executes Step S20.

### <Step S19>

The processing unit 103 determines the consumable product (toner cartridge 7) as a genuine product. In this case, the processing unit 103 sends to the control system 8 information indicating that the consumable product is a genuine product. Afterwards, the control system 8 performs control related to the consumable product, assuming that the consumable product is a genuine product.

### <Step S20>

The processing unit 103 determines the consumable product (toner cartridge 7) as a non-genuine product. In this case, the processing unit 103 sends to the control system 8 information indicating that the consumable product is a non-genuine product. Afterwards, the control system 8 performs control related to the consumable product, assuming that the consumable product is a non-genuine product. For example, the control system 8 limits some of the functions that can be executed in a case where the consumable product is a genuine product. Specifically, the control system 8 limits the function of displaying a toner gauge indicating the residual amount of the toner cartridge 7 on the display apparatus 802.

It should be noted that in a case where there is a plurality of commands as the command that is the target of the determination process, the processing unit 103 executes Steps S16 to S18 for each command. The processing unit 103 executes Step S19 in a case where the response information has been successfully received for all commands and executes Step S20 in a case where the response information has not been successfully received for at least one command.

As described above, in the information processing system 100 according to the present embodiment determines whether or not the consumable product (toner cartridge 7) is a genuine product on the basis of the response time, focusing on the point that the response time to the command differs depending on the type of the wireless tag 71. The response time is different from the identification information of the wireless tag 71 and is a parameter caused by a physical characteristic of the wireless tag 71, so the response time is not falsified by an unauthorized third party. Therefore, in the information processing system according to the embodiment 100, it is possible to determine whether or not the consumable product is a genuine product on the basis of the response time even if identification information imitating the identification information of the genuine product is stored in the wireless tag 71. Therefore, the information processing system 100 according to the present embodiment has an advantage that the accuracy of determining whether or not the consumable product is a genuine product can be enhanced as compared to a case where whether or not the consumable product is a genuine product is determined on the basis of the identification information of the wireless tag 71.

Moreover, in the information processing system 100 according to the present embodiment, the response time is a value obtained by previous measurement by communication between the information processing system 100 and the wireless tag 71 before the information processing system 100 is mounted on the image processing apparatus 10. The correlation data including the response time can be prestored on the ROM of the processing unit 103. Therefore, in the present embodiment, for example, during shipment of the image processing apparatus 10 or during set-up of option functions for a user who has ordered the image processing apparatus 10, it is unnecessary to write information for determining the genuine product to a nonvolatile memory. Therefore, there is an advantage that an additional nonvolatile memory different from the ROM of the processing unit 103 is unnecessary in the information processing system 100 according to the present embodiment.

It should be noted that in the information processing system 100 according to the present embodiment, the ROM of the processing unit 103 is favorably a rewritable ROM, such as a flash memory or an electrically erasable programmable read-only memory (EEPROM). In this case, there is an advantage that for example even in a case where the type of the wireless tag 71 increases because a version of a new model type of the image processing apparatus 10 is launched, the correlation data can be updated in accordance with the increase in the type of the wireless tag 71, so it is possible to cope with the increase in the type of the wireless tag 71.

### [3] Modified examples

In the above-mentioned embodiment, the processing unit 103 determines whether or not the consumable product (toner cartridge 7) is a genuine product on the basis of both determination results of a determination using the identification information and a determination using the response time, though not limited thereto. For example, the processing unit 103 may determine whether or not the consumable product is a genuine product on the basis of only the determination using the response time.

In the above-mentioned embodiment, the processing unit 103 executes the determination process in response to the acquisition unit 101 acquiring the type information sent from the control system 8 when the image processing apparatus 10 is activated, though not limited thereto. For example, the processing unit 103 may execute the determination process when the consumable product (toner cartridge 7) is replaced, i.e., when the consumable product is mounted on the mounting parts 5.

In this case, the information processing system 100 detects that the consumable product is mounted on the mounting part 5, for example, by communication with the wireless tag 71 and sends the detection result to the control system 8. When the control system 8 receives the detection result, the control system 8 sends type information to the information processing system 100. Accordingly, the processing unit 103 is capable of executing the determination process when the consumable product is mounted on the mounting part 5.

In the above-mentioned embodiment, the processing unit 103 executes the determination process for each of the plurality of commands sent to the wireless tag 71 and determines whether or not the consumable product (toner cartridge 7) is a genuine product on the basis of all results of the determination process, though not limited thereto. For example, the processing unit 103 may execute the determination process only for a specific command (e.g., the "Write block" command) among the plurality of commands and determine whether or not the consumable product is a genuine product on the basis of the result of the determination process.

In the above-mentioned embodiment, the acquisition unit 101, the communication unit 102, and the processing unit 103 are mounted on the single board 105, i.e., configurations of all elements of the information processing system 100 are mounted on the single board 105, though not limited thereto. For example, configurations of all elements of the information processing system 100 may be mounted on a plurality of boards.

In the above-mentioned embodiment, the processing unit 103 may determine whether or not the consumable product (toner cartridge 7) is a genuine product by measuring a time from sending the command to receiving the response information and comparing the measured time with the response time according to the type information. On this mode, in a case where the measured time is identical to the response time, the processing unit 103 determines that the consumable product is a genuine product. On the other hand, in a case where the measured time and the response time are not identical, the processing unit 103 determines that the consumable product is a non-genuine product.

In the above-mentioned embodiment, the consumable product is the toner cartridge 7, though not limited thereto. For example, the consumable product only needs to be a part that is replaced depending on a degree of consumption in the image processing apparatus 10. Moreover, for example, in a case where the image processing apparatus 10 is a printer apparatus that executes the printing process by an inkjet method, the consumable product may be an ink cartridge.

### [Notes of disclosure]

The outline of the disclosure extracted from the above-mentioned embodiments will be given below. Note that the configurations and processing functions described in the following notes can be arbitrarily selected and combined.

### <Note 1 >

An information processing system, including:
an acquisition unit that acquires type information indicating a type of a wireless tag included in a consumable product used in an image processing apparatus;
a communication unit that communicates with the wireless tag; and
a processing unit that executes, at a timing when a response time according to type information has elapsed since the processing unit sent a command to the wireless tag, a determination process of determining whether or not the consumable product is a genuine product on the basis of whether or not response information is received from the wireless tag.

### <Note 2>

The information processing system according to Note 1, in which the acquisition unit acquires, when the image processing apparatus is activated, the type information sent from a control system that performs control related to the consumable product.

### <Note 3>

The information processing system according to Note 1 or 2, in which the command includes a write command that instructs the wireless tag to write data.

### <Note 4>

The information processing system according to any one of Notes 1 to 3, in which
the processing unit acquires identification information of the wireless tag from the wireless tag and determines whether or not the consumable product is a genuine product further on the basis of comparison of the acquired identification information with the identification information for determination according to the type information.

### <Note 5>

The information processing system according to any one of Notes 1 to 4, in which
the command comprises a plurality of commands different in type of instruction to the wireless tag, and
the processing unit executes the determination process for each of the plurality of commands and determines whether or not the consumable product is a genuine product on the basis of results of all the determination processes.

### <Note 6>

The information processing system according to any one of Notes 1 to 5, in which
the acquisition unit, the communication unit, and the processing unit are mounted on one board.

### <Note 7>

An image processing apparatus, including:
the information processing system according to any one of Notes 1 to 6; and
a control system that performs control related to the consumable product.

### <Note 8>

An information processing method that is executed by one or more processors, including:
an acquisition step of acquiring type information indicating a type of a wireless tag included in a consumable product used in an image processing apparatus;
a communication step of communicating with the wireless tag; and
a determination step of executing, at a timing when a response time according to type information has elapsed since a command is sent to the wireless tag, a determination process of determining whether or not the consumable product is a genuine product on the basis of whether or not response information is received from the wireless tag.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An information processing system (100), comprising:
an acquisition unit (101) that acquires type information indicating a type of a wireless tag (71) included in a consumable product used in an image processing apparatus (10);
a communication unit (102) that communicates with the wireless tag (71); and
a processing unit (103) that executes, at a timing when a response time according to type information has elapsed since the processing unit (103) sent a command to the wireless tag (71), a determination process of determining whether or not the consumable product is a genuine product based on whether or not response information is received from the wireless tag (71).

2. The information processing system (100) according to claim 1, wherein
the acquisition unit (101) acquires, when the image processing apparatus (10) is activated, the type information sent from a control system (8) that performs control related to the consumable product.

3. The information processing system (100) according to claim 1 or 2, wherein
the command includes a write command that instructs the wireless tag (71) to write data.

4. The information processing system (100) according to claim 1 or 2, wherein
the processing unit (103) acquires identification information of the wireless tag (71) from the wireless tag (71) and determines whether or not the consumable product is a genuine product further based on comparison of the acquired identification information with the identification information for determination according to the type information.

5. The information processing system (100) according to claim 1 or 2, wherein
the command comprises a plurality of commands different in type of instruction to the wireless tag (71), and
the processing unit (103) executes the determination process for each of the plurality of commands and determines whether or not the consumable product is a genuine product based on results of all the determination processes.

6. The information processing system (100) according to claim 1 or 2, wherein
the acquisition unit (101), the communication unit (102), and the processing unit (103) are mounted on one board (105).

7. An image processing apparatus (10), comprising:
the information processing system (100) according to claim 1 or 2; and
a control system (8) that performs control related to the consumable product.

8. An information processing method that is executed by one or more processors, comprising:
an acquisition step of acquiring type information indicating a type of a wireless tag (71) included in a consumable product used in an image processing apparatus (10);
a communication step of communicating with the wireless tag (71);
and
a processing step of executing, at a timing when a response time according to type information has elapsed since a command is sent to the wireless tag (71), a determination process of determining whether or not the consumable product is a genuine product based on whether or not response information is received from the wireless tag (71).
